# EUROPEAN PATENT APPLICATION

(11) **EP 4 176 745 A1**
(43) Date of publication of application: **10.05.2023**
(21) Application number: 22201340.1
(22) Date of filing: 13.10.2022
(51) Int. Cl.: A24F 40/57, A24F 40/51, A24F 40/10

(54) **ELECTRONIC VAPORIZATION DEVICE, AND HEATING CONTROL APPARATUS AND HEATING CONTROL METHOD THEREOF**

(30) Priority: 20.10.2021 CN 202111219777
(71) Applicant: Shenzhen Smoore Technology Limited, Shenzhen Guangdong 518102 (CN)
(72) Inventor: WEN, Zhihua, Guangdong (CN); TAN, Hua, Guangdong (CN); CHEN, Houlin, Guangdong (CN); XING, Fenglei, Guangdong (CN)
(74) Representative: Westphal, Mussgnug & Partner, Patentanwälte mbB

(57) **Abstract**

The present invention relates to an electronic vaporization device, and a heating control apparatus and a heating control method thereof. The heating control method includes: obtaining a current inhalation parameter according to an inhalation situation of a user; obtaining a corresponding target temperature threshold according to the current inhalation parameter, where the target temperature threshold is progressively increased in a stepwise manner as the inhalation parameter increases; and detecting a current heating temperature value of a heating body, and adjusting the current heating temperature value of the heating body to the target temperature threshold. In the present invention, secondary heating is performed on a flavor cartridge/cigarette through the heating body. In addition, when the heating body heats the same flavor cartridge/cigarette, as an inhalation action is performed, a heating temperature of the heating body is gradually progressively increased in a stepwise manner, so that nicotine and other effectively substances in the flavor cartridge/cigarette are uniformly released in different inhalation stages, thereby improving the taste.

## Description

### FIELD

The present invention relates to the field of heating control technologies, and more specifically, to an electronic vaporization device, and a heating control apparatus and a heating control method thereof.

### BACKGROUND

In the related art, e-liquid has a plurality of flavors (for example, a fruit flavor). A flavor cartridge or a cigarette includes tobacco substances, so that a conventional tobacco taste is given out during heating, and substances such as nicotine are released. Through a combination of the e-liquid and the flavor cartridge/cigarette, flavor requirements of different users may be met.

The heating manner of an existing flavor cartridge/cigarette is generally as follows: aerosols generated after the e-liquid is heated and vaporized enters from a bottom portion of the flavor cartridge/cigarette, the tobacco substances in the flavor cartridge/cigarette may be heated since the aerosols have a specific temperature, so that nicotine is carried out for inhalation by a user. However, problems such as a low released amount of nicotine and serious attenuation of the released amount of nicotine may be caused in this heating manner, leading to a poor taste and affecting the user experience.

### SUMMARY

The technical problem to be resolved by the present invention is to provide an electronic vaporization device, and a heating control apparatus and a heating control method thereof for the foregoing defects in the related art.

The technical solutions adopted by the present invention to resolve the technical problem is to provide a heating control method, including:
obtaining a current inhalation parameter according to an inhalation situation of a user;
obtaining a corresponding target temperature threshold according to the current inhalation parameter, where the target temperature threshold is progressively increased in a stepwise manner as the inhalation parameter increases; and
detecting a current heating temperature value of a heating body, and adjusting the current heating temperature value of the heating body to the target temperature threshold.

Preferably, the current inhalation parameter includes a current inhalation time or a current inhalation duration.

Preferably, the obtaining a current inhalation time according to an inhalation situation of a user includes: obtaining the current inhalation time according to an accumulated inhalation time of the user; and
the obtaining a current inhalation duration according to an inhalation situation of a user includes: obtaining the current inhalation duration according to an accumulated inhalation duration of the user.

Preferably, the detecting a current heating temperature value of a heating body, and adjusting the current heating temperature value of the heating body to the target temperature threshold includes:
detecting the current heating temperature value of the heating body; and
providing a corresponding heating parameter to the heating body according to a difference between the target temperature threshold and the current heating temperature value, to adjust the current heating temperature value of the heating body to the target temperature threshold.

Preferably, the current heating temperature value of the heating body is adjusted according to a ΔT₁=(U^{∗}I^{∗}t-Q_{dissipation})/(M^{∗}C) relation, where
Δ T₁ represents a difference between the target temperature threshold and the current heating temperature value of the heating body, U represents a heating voltage, I represents a heating current, t represents a power-on heating time, Q_{dissipation} represents dissipation energy of the heating body, M represents a mass of a nicotine carrier heated by the heating body, and C represents a specific heat capacity of the nicotine carrier heated by the heating body.

Preferably, the current heating temperature value of the heating body is adjusted by adjusting at least one heating parameter of the heating voltage U, the heating current I, or the power-on heating time t.

Preferably, the heating control method further includes:
setting corresponding target temperature thresholds according to different inhalation parameter intervals.

Preferably, the target temperature threshold is progressively increased by using 10°C as a progressively increasing unit.

The present invention further provides a heating control apparatus, including:
a first obtaining module, configured to obtain a current inhalation parameter according to an inhalation situation of a user;
a second obtaining module, configured to obtain a corresponding target temperature threshold according to the current inhalation parameter, where the target temperature threshold is progressively increased in a stepwise manner as the inhalation parameter increases; and
a temperature processing module, configured to detect a current heating temperature value of a heating body, and adjust the current heating temperature value of the heating body to the target temperature threshold.

Preferably, the current inhalation parameter includes a current inhalation time or a current inhalation duration.

Preferably, the first obtaining module includes:
a times obtaining unit, configured to obtain the current inhalation time according to an accumulated inhalation time of the user; and
a duration obtaining unit, configured to obtain the current inhalation duration according to an accumulated inhalation duration of the user.

Preferably, the temperature processing module includes:
a temperature detection module, configured to detect the current heating temperature value of the heating body; and
a heating execution module, configured to provide a corresponding heating parameter to the heating body according to a difference between the target temperature threshold and the current heating temperature value, to adjust the current heating temperature value of the heating body to the target temperature threshold.

Preferably, the temperature processing module is configured to adjust the current heating temperature value of the heating body according to a ΔT₁=(U^{∗}I^{∗}t-Q_{dissipation})/(M^{∗}C) relation, where
Δ T₁ represents a difference between the target temperature threshold and the current heating temperature value of the heating body, U represents a heating voltage, I represents a heating current, t represents a power-on heating time, Q_{dissipation} represents dissipation energy of the heating body, M represents a mass of a nicotine carrier heated by the heating body, and C represents a specific heat capacity of the nicotine carrier heated by the heating body.

Preferably, the temperature processing module is configured to adjust the current heating temperature value of the heating body by adjusting at least one heating parameter of the heating voltage U, the heating current I, or the power-on heating time t.

Preferably, the heating control apparatus further includes:
a setting module, configured to set corresponding target temperature thresholds according to different inhalation parameter intervals.

Preferably, the target temperature threshold is progressively increased by using 10°C as a progressively increasing unit.

The present invention further provides an electronic vaporization device, including the heating control apparatus according to any one of the foregoing.

By implementing the electronic vaporization device, the heating control apparatus, and the heating control method of the present invention, the following beneficial effects may be achieved:
Secondary heating is performed on a flavor cartridge/cigarette through the heating body, so that released amounts of nicotine and other effective substances in the flavor cartridge/cigarette are effectively improved. In addition, by using the principle that a high temperature is beneficial to releasing of the nicotine and other effective substances in the flavor cartridge/cigarette, when the heating body heats the same flavor cartridge/cigarette, as an inhalation action is performed, a heating temperature of the heating body is gradually progressively increased in a stepwise manner, so that the nicotine and other effectively substances in the flavor cartridge/cigarette are released uniformly in different inhalation stages, thereby improving the taste.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 is a schematic flowchart of a first embodiment of a heating control method according to the present invention;
FIG. 2 is a curve of a relationship between various inhalation times intervals and target temperature thresholds in the first embodiment of the heating control method according to the present invention; and
FIG. 3 is a schematic structural diagram of a first embodiment of a heating control apparatus according to the present invention.

### DETAILED DESCRIPTION

The technical solutions of embodiments of the present invention are clearly and completely described below with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

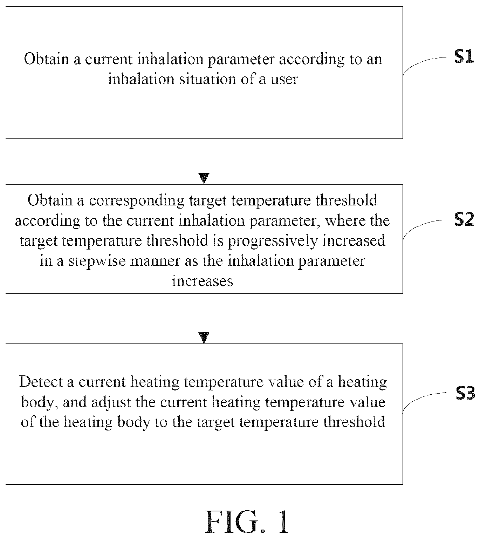

FIG. 1 is a first embodiment of a heating control method according to the present invention, and the heating control method of this embodiment may be applicable to an electronic vaporization device. The electronic vaporization device performs heating on a flavor cartridge/cigarette twice, where the first heating is that, aerosols generated after e-liquid is heated and vaporized enters from a bottom portion of the flavor cartridge/cigarette, to heat the flavor cartridge/cigarette; and the second heating is that, a heating body is inserted into the flavor cartridge/cigarette, to heat the flavor cartridge/cigarette. It may be understood that, the flavor cartridge/cigarette includes tobacco substances, so that the flavor cartridge/cigarette is used as a carrier of substances such as nicotine, a conventional tobacco taste may be given out after the tobacco substances in the flavor cartridge/cigarette are heated, and nicotine and other effective substances are released.

In this embodiment, by controlling the second heating on the flavor cartridge/cigarette, namely, by controlling a heating temperature of the heating body, different heating temperatures are provided to the flavor cartridge/cigarette in different inhalation stages, so that the nicotine and other effective substances in the flavor cartridge/cigarette are released uniformly in different inhalation stages, thereby improving the taste. It may be understood that, for a structure of the electronic vaporization device in this embodiment, reference may be made to an implementation in the related art, which includes a suction nozzle, an airway, and a power supply battery.

As shown in FIG. 1, in this embodiment, the heating control method includes the following steps:
S1: Obtain a current inhalation parameter according to an inhalation situation of a user.

Specifically, in this step, whether there is an inhalation action may be recognized through a pneumatic switch, and when an inhalation action is recognized, the pneumatic switch outputs an inhalation signal through closing. The current inhalation parameter is then obtained through an output situation of the inhalation signal. It may be understood that, in some existing technologies, a button switch is manually controlled, so that start and stop of the electronic vaporization device are controlled through closing and opening of the button switch.

In this embodiment, a user does not need to manually control the start and stop of the electronic vaporization device. When the user performs inhalation at the suction nozzle, air flows through the airway and the pneumatic switch senses an inhalation action, and when the pneumatic switch senses an inhalation action, a switch of the pneumatic switch is closed, so that an inhalation signal is outputted once when the switch is closed once. When the user stops inhalation, the pneumatic switch cannot sense an inhalation action, so that the switch is not closed, and outputting of the inhalation signal is stopped.

It may be understood that, when the user performs inhalation, air in the suction nozzle may be driven to flow, to generate an airflow and an air pressure. In this embodiment, the pneumatic switch may include at least one of an airflow sensor or an air pressure sensor. When the pneumatic switch is an airflow sensor, when the airflow sensor senses that there is an airflow whose airflow value reaches an airflow preset threshold, the airflow sensor may determine that there is an inhalation action. The airflow sensor may be a microphone, the airflow preset threshold may be set according to an actual situation, and the airflow preset threshold is distinguished from an airflow value when air flows naturally, so that when the user puts the electronic vaporization device in a pocket, occurrence that the airflow sensor mistakenly senses an inhalation action due to an airflow flowing naturally is avoided.

When the pneumatic switch is an air pressure sensor, when the air pressure sensor senses that there is air whose air pressure value reaches an air pressure preset threshold, the air pressure sensor may determine that there is an inhalation action. The air pressure preset threshold may be set according to an actual situation, and the air pressure preset threshold is distinguished from an air pressure value when air flows naturally.

It may be understood that, the pneumatic switch may include both the airflow sensor and the air pressure sensor, and only when the air in the suction nozzle both reaches the airflow preset threshold and the air pressure preset threshold, the pneumatic switch senses that there is an inhalation action and outputs an inhalation signal. Certainly, in some embodiments, the inhalation action may also be recognized through a button switch, and when the user opens the button switch, the button switch is closed to output an inhalation signal.

The current inhalation parameter is obtained through an output situation of the inhalation signal. It may be understood that, when the pneumatic switch senses an inhalation action, the switch of the pneumatic switch is closed once to output the inhalation signal once. The current inhalation parameter may be a current inhalation times. Specifically, according to each output of the inhalation signal, an output times of the inhalation signal is accumulated, to obtain the current inhalation times, and a corresponding target temperature threshold is obtained according to the current inhalation times.

It may be understood that, if one inhalation action is being performed, an inhalation times corresponding to the inhalation action is the current inhalation times; and if one inhalation action has been ended and a next inhalation action is not performed, an inhalation times corresponding to the next inhalation action is the current inhalation times. Therefore, it may be ensured that inhalation at each time corresponds to the target temperature threshold.

S2: Obtain a corresponding target temperature threshold according to the current inhalation parameter, where the target temperature threshold is progressively increased in a stepwise manner as the inhalation parameter increases.

In this embodiment, the target temperature threshold is progressively increased in a stepwise manner as the inhalation parameter increases, namely, in a specific interval of the inhalation parameter, inhalation parameters in this interval correspond to the same target temperature threshold. It may be understood that, the heating control method of the present invention may further include:
S0: Set corresponding target temperature thresholds according to different inhalation parameter intervals.

It may be understood that, when the current inhalation parameter is the current inhalation times, corresponding target temperature thresholds may be set according to different inhalation times intervals in advance. In step S2, after the current inhalation times is obtained, an inhalation times interval in which the current inhalation times falls is determined, and a target temperature threshold corresponding to the inhalation times interval is obtained. A specific setting form may be to set a relationship curve between various inhalation times intervals and target temperature thresholds or a corresponding table. It may be understood that, for the same flavor cartridge/cigarette, in step S0, the correspondence may be set once and does not need to be set repeatedly.

The target temperature threshold is progressively increased by using 10°C as a progressively increasing unit. That is, a difference between target temperature thresholds corresponding to adjacent inhalation times intervals is 10°C. Heating is performed by using 10°C as a gradient, so that released amounts of the nicotine and other effective substances in the flavor cartridge/cigarette in different inhalation times intervals are relatively uniform. A heating temperature of 50°C may be used as a heating temperature corresponding to an initial inhalation times interval, to avoid defects that related substances are burnt due to an excessively high heating temperature or the related substances are hard to be released due to an excessively low heating temperature.

S3: Detect a current heating temperature value of a heating body, and adjust the current heating temperature value of the heating body to the target temperature threshold. This step includes:
S31: Detect the current heating temperature value of the heating body.

It may be understood that, the heating body may include a substrate and a heating device arranged on the substrate, the substrate may include a tubular body and a conical head portion arranged on a first end of the tubular body, and arrangement of the conical head portion facilitates insertion of the heating body into the flavor cartridge/cigarette. The heating device may be a heating film arranged on the tubular body, and when the tubular body is a hollow structure, the heating film may be covered on an inner wall and/or an outer surface of the tubular body. In some embodiments, the substrate may be a sheet-shaped structure with one end having a sharp end structure. In some embodiments, the heating device may be a heating wire wound on a periphery of the tubular body or an FPC covered on the tubular body. Through arrangement of the heating device, the entire heating body has a heating temperature.

It may be understood that, the current heating temperature value of the heating body may be measured through a temperature measurement device or a temperature coefficient of resistance (TCR) of the heating body. The temperature measurement device may be a thermistor, a thermal resistor, a temperature measurement film, or a thermocouple, and is implemented with reference to an existing manner.

S32: Provide a corresponding heating parameter to the heating body according to a difference between the target temperature threshold and the current heating temperature value, to adjust the current heating temperature value of the heating body to the target temperature threshold. This step includes:

S321: Generate a heating control signal according to the difference between the target temperature threshold and the current heating temperature value.

After the target temperature threshold and the current heating temperature value of the heating body are obtained, a temperature difference ΔT₁ between the target temperature threshold and the current heating temperature value is calculated according to a relation that the temperature different ΔT₁ is equal to a value obtained by subtracting the current heating temperature value from the target temperature threshold.

It may be understood that, when ΔT₁ is greater than 0, the heating temperature of the heating body needs to be increased, and a heating control signal is generated in this case.

When ΔT₁ is equal to 0, the current heating temperature of the heating body needs to be kept, and a temperature keeping control signal is generated in this case.

When ΔT₁ is less than 0, the heating temperature of the heating body needs to be decreased, and a cooling control signal is generated in this case.

S332: Provide a corresponding heating parameter to the heating body according to the heating control signal, to adjust the current heating temperature value of the heating body to the target temperature threshold.

It may be understood that, according to the heating control signal, the heating parameter provided to the heating body is adjusted, specifically, the heating parameter is adjusted to a heating parameter that causes the heating temperature to increase, so that the heating temperature of the heating body increases and reaches the target temperature threshold.

According to the temperature keeping control signal, the heating parameter provided to the heating body does not need to be adjusted, so that the heating temperature of the heating body is kept at the target temperature threshold.

According to the cooling control signal, the heating parameter provided to the heating body is adjusted, specifically, the heating parameter is adjusted to a heating parameter that causes the heating temperature to decrease, so that the heating temperature of the heating body decreases and reaches the target temperature threshold.

In this embodiment, when the heating body is inserted into the flavor cartridge/cigarette to perform heating, a change temperature ΔT₂ of the flavor cartridge/cigarette has the following relation: ΔT₂=ΔQ/(M^{∗}C), where ΔQ represents energy changes of the flavor cartridge/cigarette, M represents a mass of the flavor cartridge/cigarette, and C represents a specific heat capacity of the flavor cartridge/cigarette.

ΔQ=ΔQ_{heating}-ΔQ_{dissipation}, where ΔQ_{heating} represents energy brought when the heating body is powered on for heating, and ΔQ_{dissipation} represents energy dissipated by the heating body due to heat dissipation. ΔQ_{heating}=P^{∗}t, where P represents heating power, and t represents a power-on heating time. P=U^{∗}I, where U represents a heating voltage, and I represents a heating current.

According to the foregoing, a relation ΔT₂=(U^{∗}I^{∗}t-Q_{dissipation})/(M^{∗}C) is obtained. It may be understood that, when ΔT₂ is greater than 0, it indicates that a temperature of the flavor cartridge/cigarette is increased; when ΔT₂ is equal to 0, it indicates that the temperature of the flavor cartridge/cigarette is kept unchanged; and when ΔT₂ is less than 0, it indicates that the temperature of the flavor cartridge/cigarette is decreased.

It may be understood that, in a process that the heating body heats the flavor cartridge/cigarette, the mass M of the flavor cartridge/cigarette and the specific heat capacity C of the flavor cartridge/cigarette may change, but the two values are always positive numbers. Therefore, a positive or negative value of ΔT₂ may be changed by controlling a positive or negative value of ΔQ.

Because ΔQ=U^{∗}I^{∗}t-Q_{dissipation} and Q_{dissipation} is related to the characteristics of the flavor cartridge/cigarette and heat dissipation performance of the electronic vaporization device, in the same electronic vaporization device and the same flavor cartridge/cigarette, Q_{dissipation} is relatively fixed, and a value of may be ΔT₂ changed according to the relation Q_{heating}=U^{∗}I^{∗}t.

In this embodiment, the current heating temperature value of the heating body is adjusted according to the relation ΔT₂=(U^{∗}I^{∗}t-Q_{dissipation})/(M^{∗}C), where the change temperature ΔT₂ of the flavor cartridge/cigarette is adjusted by adjusting at least one heating parameter of the heating voltage U, the heating current I, or the heating time t, to adjust the current heating temperature value of the heating body. It may be understood that, the temperature changes of the flavor cartridge/cigarette are implemented under the temperature changes of the heating body, and when ΔT₂=ΔT₁, it indicates that the current heating temperature value of the heating body is adjusted to the target temperature threshold. It may be understood that, control over the heating voltage U and the heating current I may be implemented with reference to an element such as a MOS transistor, a transistor, or a relay in the related art.

In this case, a temperature keeping control signal may be generated, the heating voltage U, the heating current I, and the heating time t are determined according to the temperature keeping control signal and are provided to the heating body, so that the current heating temperature value of the heating body is kept at the target temperature threshold.

It may be understood that, the foregoing steps S1 to S3 are used as a heating control step, and in a process that the heating body heats the same flavor cartridge/cigarette or in an entire process of inhalation performed by a user, the foregoing heating control step is performed repeatedly and circularly.

It may be understood that, when the heating body heats the same flavor cartridge/cigarette, as the current inhalation times increases, a total amount of nicotine and other effective substances in the flavor cartridge/cigarette is gradually decreased, and if the heating body heats the flavor cartridge/cigarette at the same heating temperature, released amounts of the nicotine and other effective substances in the flavor cartridge/cigarette are gradually decreased. In this embodiment, by using the principle that a high temperature is beneficial to releasing of the nicotine and other effective substances in the flavor cartridge/cigarette, the target temperature threshold is set to be gradually progressively changed as the inhalation times increases, so that the nicotine and other effective substances in the flavor cartridge/cigarette are released uniformly in different inhalation stages.

In this embodiment, based on the principle that the released amounts of the nicotine and other effective substances in the flavor cartridge/cigarette may be increased by increasing the temperature, the flavor cartridge/cigarette is heated in a manner that a heating temperature in a later stage of inhalation is higher than or equal to a heating temperature in an early stage of inhalation, thereby resolving the problem that the released amounts of the nicotine and other effective substances are gradually decreased as the inhalation times increases. It may be understood that, a correspondence between the current inhalation times and the target temperature threshold changes according to different electronic vaporization devices and different flavor cartridges/cigarettes, but the target temperature threshold is entirely changed in a form that a temperature in a later stage of inhalation is greater than or equal to a temperature in an early stage of inhalation.

A second embodiment of the heating control method according to the present invention is provided, and a difference between this embodiment and the first embodiment lies in that, types of the current inhalation parameter and the inhalation parameter interval are different. In this embodiment, in step S1, the current inhalation parameter may be a current inhalation duration. Specifically, according to an output duration of each output of the inhalation signal, the output duration of each inhalation signal is accumulated to obtain the current inhalation duration, and a corresponding target temperature threshold is obtained according to the current inhalation duration.

It may be understood that, if one inhalation action is being performed, an inhalation duration corresponding to the inhalation action is the current inhalation duration; and if one inhalation action has been ended and a next inhalation action is not performed, an inhalation duration corresponding to the next inhalation action is the current inhalation duration. Therefore, it may be ensured that inhalation at each time corresponds to the target temperature threshold.

It may be understood that, when the heating body heats the same flavor cartridge/cigarette, as the current inhalation duration increases, a total amount of nicotine and other effective substances in the flavor cartridge/cigarette is gradually decreased, and if the heating body heats the flavor cartridge/cigarette at the same heating temperature, released amounts of the nicotine and other effective substances in the flavor cartridge/cigarette are gradually decreased. In this embodiment, by using the principle that a high temperature is beneficial to releasing of the nicotine and other effective substances in the flavor cartridge/cigarette, the target temperature threshold is set to be gradually progressively changed as the inhalation duration increases, so that the nicotine and other effective substances in the flavor cartridge/cigarette are released uniformly in different inhalation stages.

In step S0, corresponding target temperature thresholds are set according to different inhalation parameter intervals.

It may be understood that, when the current inhalation parameter is the current inhalation duration, corresponding target temperature thresholds may be set according to different inhalation duration intervals in advance. In step S2, after the current inhalation duration is obtained, an inhalation duration interval in which the current inhalation duration falls is determined, and a target temperature threshold corresponding to the inhalation duration interval is obtained.

The target temperature threshold uses 10°C as a progressively increasing unit. That is, a difference between target temperature thresholds corresponding to adjacent inhalation duration intervals is 10°C. Heating is performed by using 10°C as a gradient, so that released amounts of the nicotine and other effective substances in the flavor cartridge/cigarette in different inhalation duration intervals are relatively uniform. A heating temperature of 50°C may be used as a heating temperature corresponding to an initial inhalation times interval, to avoid defects that related substances are burnt due to an excessively high heating temperature or the related substances are hard to be released due to an excessively low heating temperature.

In this embodiment, based on the principle that the released amounts of the nicotine and other effective substances in the flavor cartridge/cigarette may be increased by increasing the temperature, the flavor cartridge/cigarette is heated in a manner that a heating temperature in a later stage of inhalation is higher than or equal to a heating temperature in an early stage of inhalation, thereby resolving the problem that the released amounts of the nicotine and other effective substances are gradually decreased as the inhalation duration increases. It may be understood that, a correspondence between the inhalation duration and the target temperature threshold changes according to different electronic vaporization devices and different flavor cartridges/cigarettes, but the target temperature threshold is entirely changed in a form that a temperature in a later stage of inhalation is greater than or equal to a temperature in an early stage of inhalation.

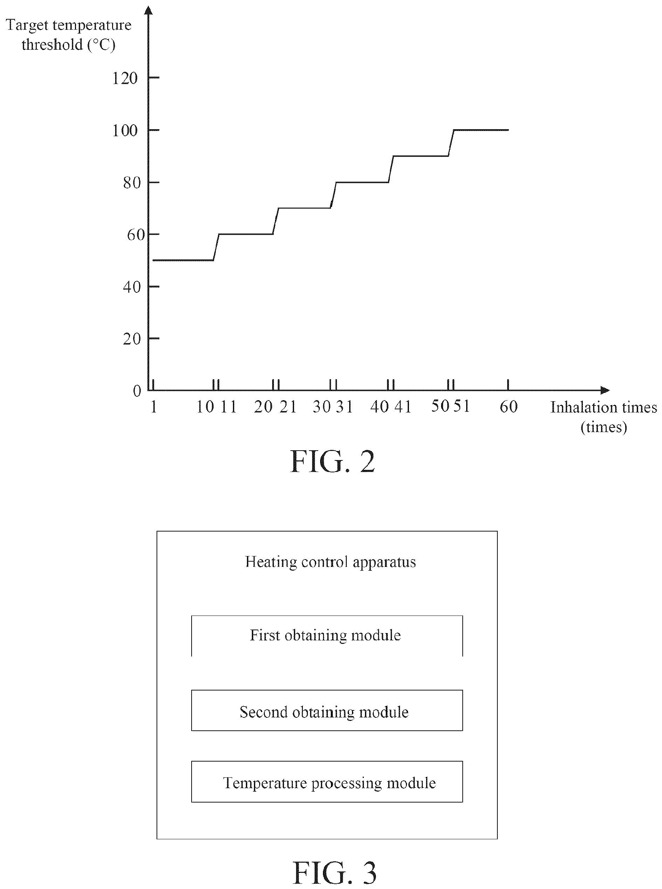

The first embodiment of the heating control method according to the present invention is described below by using a specific application as an example. Steps are as follows:
S100: Set a correspondence between the inhalation times intervals and the target temperature thresholds as follows: the inhalation times intervals may be set as 1 time to 10 times, 11 times to 20 times, 21 times to 30 times, 31 times to 40 times, 41 times to 50 times, and 51 times to 60 times, and the target temperature thresholds corresponding to the intervals are respectively 50°C, 60°C, 70°C, 80°C, 90°C, and 100°C, which is shown in FIG. 2.
S101: Output one inhalation signal when the pneumatic switch recognizes one inhalation action.
S102: Determine, when a twentieth inhalation action is obtained according to an output times of the inhalation signal and next inhalation of the current inhalation times is twenty-first inhalation, that the twenty-first inhalation falls in the inhalation times interval from 21 times to 30 times, and obtain the target temperature threshold 70°C corresponding to the interval.
S103: Detect that the current heating temperature value of the heating body is 60°C.

According to the relation that ΔT₁ is obtained by subtracting the current heating temperature value from the target temperature threshold, calculation is performed to obtain that the temperature difference is ΔT₁=70°C-60°C=10°C, and a heating control signal is generated.

According to the heating control signal, because the relation Q_{heating}=U^{∗}I^{∗}t, in the heating parameters provided to the heating body, the previous heating voltage U and the heating current I may be kept, and the power-on heating time t is increased, to increase Q_{heating}, so that ΔQ is greater than 0 and ΔT2 is greater than 0, and the temperature of the flavor cartridge/cigarette is therefore increased.

Step S103 is performed circularly until ΔT₂=ΔT₁, and when ΔT₂=ΔT₁, it indicates that a temperature by which the flavor cartridge/cigarette is increased is equal to the difference between the target temperature threshold and the current heating temperature value, so that the current heating temperature value of the heating body is adjusted to the target temperature threshold.

When ΔT₂=ΔT₁, a temperature keeping control signal is generated, the current heating voltage U, the heating current I, and the power-on heating time t are determined, and supplies of the heating parameters are kept in the inhalation times interval from 21 times to 30 times. In this case, ΔQ=Q_{heating}-Q_{dissipation}=0 and ΔT₁ is equal to 0, and the temperature of the flavor cartridge/cigarette is kept unchanged.

It may be understood that, if in a process that heating parameters are provided to the heating body according to the heating control signal, the current heating temperature value is greater than the target temperature threshold 70°C, the power-on heating time t in the current inhalation times interval from 21 times to 30 times may be reduced, and in this case, ΔQ is less than 0 and ΔT₁ is less than 0, and the temperature of the flavor cartridge/cigarette is decreased. It may be understood that, Q_{heating} may also be adjusted by adjusting one or more of the heating voltage U, the heating current I, or the power-on heating time t.

It may be understood that, in a process that the heating body heats the same flavor cartridge/cigarette or in an entire process of inhalation performed by a user, heating control over the heating body may be implemented by performing the foregoing steps S101 to S103 repeatedly and circularly. It may be understood that, for the same flavor cartridge/cigarette, step S100 generally needs to be performed once and does not need to be performed repeatedly.

The second embodiment of the heating control method according to the present invention is described below by using a specific application as an example. A difference between specific applications of this embodiment and the first embodiment lies in that, the current inhalation parameter is a current inhalation duration, and the inhalation parameter interval is an inhalation duration interval. In this embodiment, steps are as follows:
S200: Set a correspondence between the inhalation duration intervals and the target temperature thresholds as follows: the inhalation duration intervals may be set as 0s to 30s, 31s to 60s, 61s to 90s, 91s to 120s, 121s to 150s, and 151s to 180s, and the target temperature thresholds corresponding to the intervals are respectively 50°C, 60°C, 70°C, 80°C, 90°C, and 100°C.
S201 is the same as the foregoing step S101.
S202: Determine, when an inhalation action at a sixtieth second ends according to an output duration of the inhalation signal and a next second of the current inhalation duration is a sixty-first second, that the sixty-first second falls in the inhalation duration interval from 61s to 90s, and obtain the target temperature threshold 70°C corresponding to the interval.
S203 is the same as the foregoing step S103.

FIG. 3 shows a first embodiment of a heating control apparatus according to the present invention. Functions implemented by the heating control apparatus of this embodiment corresponding to the heating control method according to the first embodiment. As shown in FIG. 3, the heating control apparatus includes a first obtaining module, a second obtaining module, and a temperature processing module.

The first obtaining module is configured to obtain a current inhalation parameter according to an inhalation situation of a user.

Specifically, in this module, whether there is an inhalation action may be recognized through a pneumatic switch, and when an inhalation action is recognized, the pneumatic switch outputs an inhalation signal through closing. The current inhalation parameter is then obtained through an output situation of the inhalation signal. It may be understood that, in some existing technologies, a button switch is manually controlled, so that start and stop of the electronic vaporization device are controlled through closing and opening of the button switch.

In this embodiment, a user does not need to manually control the start and stop of the electronic vaporization device. When the user performs inhalation at the suction nozzle, air flows through the airway and the pneumatic switch senses an inhalation action, and when the pneumatic switch senses an inhalation action, a switch of the pneumatic switch is closed, so that an inhalation signal is outputted once when the switch is closed once. When the user stops inhalation, the pneumatic switch cannot sense an inhalation action, so that the switch is not closed, and outputting of the inhalation signal is stopped.

It may be understood that, when the user performs inhalation, air in the suction nozzle may be driven to flow, to generate an airflow and an air pressure. In this embodiment, the pneumatic switch may include at least one of an airflow sensor or an air pressure sensor. When the pneumatic switch is an airflow sensor, when the airflow sensor senses that there is an airflow whose airflow value reaches an airflow preset threshold, the airflow sensor may determine that there is an inhalation action. The airflow sensor may be a microphone, the airflow preset threshold may be set according to an actual situation, and the airflow preset threshold is distinguished from an airflow value when air flows naturally, so that when the user puts the electronic vaporization device in a pocket, occurrence that the airflow sensor mistakenly senses an inhalation action due to an airflow flowing naturally is avoided.

When the pneumatic switch is an air pressure sensor, when the air pressure sensor senses that there is air whose air pressure value reaches an air pressure preset threshold, the air pressure sensor may determine that there is an inhalation action. The air pressure preset threshold may be set according to an actual situation, and the air pressure preset threshold is distinguished from an air pressure value when air flows naturally.

It may be understood that, the pneumatic switch may include both the airflow sensor and the air pressure sensor, and only when the air in the suction nozzle both reaches the airflow preset threshold and the air pressure preset threshold, the pneumatic switch senses that there is an inhalation action and outputs an inhalation signal. Certainly, in some embodiments, the inhalation action may also be recognized through a button switch, when the user opens the button switch, the button switch is closed to output an inhalation signal.

The current inhalation parameter is obtained through an output situation of the inhalation signal. It may be understood that, when the pneumatic switch senses an inhalation action, the switch of the pneumatic switch is closed once to output the inhalation signal once. The current inhalation parameter may be a current inhalation times. Specifically, the first obtaining module includes a times obtaining unit, and the times obtaining unit is configured to obtain the current inhalation times according to an accumulated inhalation times of the user. Specifically, according to each output of the inhalation signal, an output times of the inhalation signal is accumulated, to obtain the current inhalation times, and a corresponding target temperature threshold is obtained according to the current inhalation times.

It may be understood that, if one inhalation action is being performed, an inhalation times corresponding to the inhalation action is the current inhalation times; and if one inhalation action has been ended and a next inhalation action is not performed, an inhalation times corresponding to the next inhalation action is the current inhalation times. Therefore, it may be ensured that inhalation at each time corresponds to the target temperature threshold.

The second obtaining module is configured to obtain a corresponding target temperature threshold according to the current inhalation parameter, where the target temperature threshold is progressively increased in a stepwise manner as the inhalation parameter increases.

In this embodiment, the target temperature threshold is progressively increased in a stepwise manner as the inhalation parameter increases, namely, in a specific interval of the inhalation parameter, inhalation parameters in this interval correspond to the same target temperature threshold. It may be understood that, the heating control apparatus of the present invention may further include:
a setting module, configured to set corresponding target temperature thresholds according to different inhalation parameter intervals.

It may be understood that, when the current inhalation parameter is the current inhalation times, corresponding target temperature thresholds may be set according to different inhalation times intervals in advance. The second obtaining module is configured to, after the current inhalation times is obtained, determine an inhalation times interval in which the current inhalation times falls, and obtain a target temperature threshold corresponding to the inhalation times interval. A specific setting form may be to set a relationship curve between various inhalation times intervals and target temperature thresholds or a corresponding table. It may be understood that, for the same flavor cartridge/cigarette, in the setting module, the correspondence may be set once and does not need to be set repeatedly.

The target temperature threshold is progressively increased by using 10°C as a progressively increasing unit. That is, a difference between target temperature thresholds corresponding to adjacent inhalation times intervals is 10°C. Heating is performed by using 10°C as a gradient, so that released amounts of the nicotine and other effective substances in the flavor cartridge/cigarette in different inhalation times intervals are relatively uniform. A heating temperature of 50°C may be used as a heating temperature corresponding to an initial inhalation times interval, to avoid defects that related substances are burnt due to an excessively high heating temperature or the related substances are hard to be released due to an excessively low heating temperature.

The temperature processing module is configured to detect a current heating temperature value of a heating body, and adjust the current heating temperature value of the heating body to the target temperature threshold. The temperature processing module includes a temperature detection module and a heating execution module.

The temperature detection module is configured to detect the current heating temperature value of the heating body.

It may be understood that, the heating body may include a substrate and a heating device arranged on the substrate, the substrate may include a tubular body and a conical head portion arranged on a first end of the tubular body, and arrangement of the conical head portion facilitates insertion of the heating body into the flavor cartridge/cigarette. The heating device may be a heating film arranged on the tubular body, and when the tubular body is a hollow structure, the heating film may be covered on an inner wall and/or an outer surface of the tubular body. In some embodiments, the substrate may be a sheet-shaped structure with one end having a sharp end structure. In some embodiments, the heating device may be a heating wire wound on a periphery of the tubular body or an FPC covered on the tubular body. Through arrangement of the heating device, the entire heating body has a heating temperature.

It may be understood that, the current heating temperature value of the heating body may be measured through a temperature measurement device or a temperature coefficient of resistance (TCR) of the heating body. The temperature measurement device may be a thermistor, a thermal resistor, a temperature measurement film, or a thermocouple, and is implemented with reference to an existing manner.

The heating execution module is configured to provide a corresponding heating parameter to the heating body according to a difference between the target temperature threshold and the current heating temperature value, to adjust the current heating temperature value of the heating body to the target temperature threshold. The heating execution module includes a signal generation unit and a parameter providing unit.

The signal generation unit is configured to generate a heating control signal according to the difference between the target temperature threshold and the current heating temperature value.

After the target temperature threshold and the current heating temperature value of the heating body are obtained, a temperature difference ΔT₁ between the target temperature threshold and the current heating temperature value is calculated according to a relation that the temperature different ΔT₁ is equal to a value obtained by subtracting the current heating temperature value from the target temperature threshold.

It may be understood that, when ΔT₁ is greater than 0, the heating temperature of the heating body needs to be increased, and a heating control signal is generated in this case.

When ΔT₁ is equal to 0, the current heating temperature of the heating body needs to be kept, and a temperature keeping control signal is generated in this case.

When ΔT₁ is less than 0, the heating temperature of the heating body needs to be decreased, and a cooling control signal is generated in this case.

The parameter providing unit is configured to provide a corresponding heating parameter to the heating body according to the heating control signal, to adjust the current heating temperature value of the heating body to the target temperature threshold.

It may be understood that, according to the heating control signal, the heating parameter provided to the heating body is adjusted, specifically, the heating parameter is adjusted to a heating parameter that causes the heating temperature to increase, so that the heating temperature of the heating body increases and reaches the target temperature threshold.

According to the temperature keeping control signal, the heating parameter provided to the heating body does not need to be adjusted, so that the heating temperature of the heating body is kept at the target temperature threshold.

According to the cooling control signal, the heating parameter provided to the heating body is adjusted, specifically, the heating parameter is adjusted to a heating parameter that causes the heating temperature to decrease, so that the heating temperature of the heating body decreases and reaches the target temperature threshold.

In this embodiment, when the heating body is inserted into the flavor cartridge/cigarette to perform heating, a change temperature ΔT₂ of the flavor cartridge/cigarette has the following relation: ΔT₂=ΔQ/(M^{∗}C), where ΔQ represents energy changes of the flavor cartridge/cigarette, M represents a mass of the flavor cartridge/cigarette, and C represents a specific heat capacity of the flavor cartridge/cigarette.

ΔQ=ΔQ_{heating}-ΔQ_{dissipation}, where ΔQ_{heating} represents energy brought when the heating body is powered on for heating, and ΔQ_{dissipation} represents energy dissipated by the heating body due to heat dissipation. ΔQ_{heating}=P^{∗}t, where P represents heating power, and t represents a power-on heating time. P=U^{∗}I, where U represents a heating voltage, and I represents a heating current.

According to the foregoing, a relation ΔT₂=(U^{∗}I^{∗}t-Q_{dissipation})/(M^{∗}C) is obtained. It may be understood that, when ΔT₂ is greater than 0, it indicates that a temperature of the flavor cartridge/cigarette is increased; when ΔT₂ is equal to 0, it indicates that the temperature of the flavor cartridge/cigarette is kept unchanged; and when ΔT₂ is less than 0, it indicates that the temperature of the flavor cartridge/cigarette is decreased.

It may be understood that, in a process that the heating body heats the flavor cartridge/cigarette, the mass M of the flavor cartridge/cigarette and the specific heat capacity C of the flavor cartridge/cigarette may change, but the two values are always positive numbers. Therefore, a positive or negative value of ΔT₂ may be changed by controlling a positive or negative value of ΔQ.

Because ΔQ=U^{∗}I^{∗}t-Q_{dissipation} and Q_{dissipation} is related to the characteristics of the flavor cartridge/cigarette and heat dissipation performance of the electronic vaporization device, in the same electronic vaporization device and the same flavor cartridge/cigarette, Q_{dissipation} is relatively fixed, and a value of may be ΔT₂ changed according to the relation Q_{heating}=U^{∗}I^{∗}t.

In this embodiment, the current heating temperature value of the heating body is adjusted according to the relation ΔT₂₌(U^{∗}I^{∗}t-Q_{dissipation})/(M^{∗}C), where the change temperature ΔT₂ of the flavor cartridge/cigarette is adjusted by adjusting at least one heating parameter of the heating voltage U, the heating current I, or the heating time t, to adjust the current heating temperature value of the heating body. It may be understood that, the temperature changes of the flavor cartridge/cigarette are implemented under the temperature changes of the heating body, and when ΔT₂=ΔT₁, it indicates that the current heating temperature value of the heating body is adjusted to the target temperature threshold. It may be understood that, control over the heating voltage U and the heating current I may be implemented with reference to an element such as a MOS transistor, a transistor, or a relay in the related art.

In this case, a temperature keeping control signal may be generated, the heating voltage U, the heating current I, and the heating time t are determined according to the temperature keeping control signal and are provided to the heating body, so that the current heating temperature value of the heating body is kept at the target temperature threshold.

It may be understood that, operations performed by the first obtaining module, the second obtaining module, and the temperature processing module are used as a heating control step, and in a process that the heating body heats the same flavor cartridge/cigarette or in an entire process of inhalation performed by a user, the foregoing heating control step is performed repeatedly and circularly.

It may be understood that, when the heating body heats the same flavor cartridge/cigarette, as the current inhalation times increases, a total amount of nicotine and other effective substances in the flavor cartridge/cigarette is gradually decreased, and if the heating body heats the flavor cartridge/cigarette at the same heating temperature, released amounts of the nicotine and other effective substances in the flavor cartridge/cigarette are gradually decreased. In this embodiment, by using the principle that a high temperature is beneficial to releasing of the nicotine and other effective substances in the flavor cartridge/cigarette, the target temperature threshold is set to be gradually progressively changed as the inhalation times increases, so that the nicotine and other effective substances in the flavor cartridge/cigarette are released uniformly in different inhalation stages.

In this embodiment, based on the principle that the released amounts of the nicotine and other effective substances in the flavor cartridge/cigarette may be increased by increasing the temperature, the flavor cartridge/cigarette is heated in a manner that a heating temperature in a later stage of inhalation is higher than or equal to a heating temperature in an early stage of inhalation, thereby resolving the problem that the released amounts of the nicotine and other effective substances are gradually decreased as the inhalation times increases. It may be understood that, a correspondence between the current inhalation times and the target temperature threshold changes according to different electronic vaporization devices and different flavor cartridges/cigarettes, but the target temperature threshold is entirely changed in a form that a temperature in a later stage of inhalation is greater than or equal to a temperature in an early stage of inhalation.

A second embodiment of the heating control apparatus according to the present invention is provided, and a difference between this embodiment and the first embodiment lies in that, types of the current inhalation parameter and the inhalation parameter interval are different. In this embodiment, in the first obtaining unit, the current inhalation parameter may be a current inhalation duration. Specifically, the first obtaining unit includes a duration obtaining unit, and the duration obtaining unit is configured to obtain the current inhalation duration according to an accumulated inhalation duration of the user. Specifically, according to an output duration of each output of the inhalation signal, the output duration of each inhalation signal is accumulated to obtain the current inhalation duration, and a corresponding target temperature threshold is obtained according to the current inhalation duration.

It may be understood that, if one inhalation action is being performed, an inhalation duration corresponding to the inhalation action is the current inhalation duration; and if one inhalation action has been ended and a next inhalation action is not performed, an inhalation duration corresponding to the next inhalation action is the current inhalation duration. Therefore, it may be ensured that inhalation at each time corresponds to the target temperature threshold.

It may be understood that, when the heating body heats the same flavor cartridge/cigarette, as the current inhalation duration increases, a total amount of nicotine and other effective substances in the flavor cartridge/cigarette is gradually decreased, and if the heating body heats the flavor cartridge/cigarette at the same heating temperature, released amounts of the nicotine and other effective substances in the flavor cartridge/cigarette are gradually decreased. In this embodiment, by using the principle that a high temperature is beneficial to releasing of the nicotine and other effective substances in the flavor cartridge/cigarette, the target temperature threshold is set to be gradually progressively changed as the inhalation duration increases, so that the nicotine and other effective substances in the flavor cartridge/cigarette are released uniformly in different inhalation stages.

The setting module is configured to set corresponding target temperature thresholds according to different inhalation parameter intervals.

It may be understood that, when the current inhalation parameter is the current inhalation duration, corresponding target temperature thresholds may be set according to different inhalation duration intervals in advance. The second obtaining module is configured to, after the current inhalation duration is obtained, determine an inhalation duration interval in which the current inhalation duration falls, and obtain a target temperature threshold corresponding to the inhalation duration interval.

The target temperature threshold uses 10°C as a progressively increasing unit. That is, a difference between target temperature thresholds corresponding to adjacent inhalation duration intervals is 10°C. Heating is performed by using 10°C as a gradient, so that released amounts of the nicotine and other effective substances in the flavor cartridge/cigarette in different inhalation duration intervals are relatively uniform. A heating temperature of 50°C may be used as a heating temperature corresponding to an initial inhalation times interval, to avoid defects that related substances are burnt due to an excessively high heating temperature or the related substances are hard to be released due to an excessively low heating temperature.

In this embodiment, based on the principle that the released amounts of the nicotine and other effective substances in the flavor cartridge/cigarette may be increased by increasing the temperature, the flavor cartridge/cigarette is heated in a manner that a heating temperature in a later stage of inhalation is higher than or equal to a heating temperature in an early stage of inhalation, thereby resolving the problem that the released amounts of the nicotine and other effective substances are gradually decreased as the inhalation duration increases. It may be understood that, a correspondence between the inhalation duration and the target temperature threshold changes according to different electronic vaporization devices and different flavor cartridges/cigarettes, but the target temperature threshold is entirely changed in a form that a temperature in a later stage of inhalation is greater than or equal to a temperature in an early stage of inhalation.

An electronic vaporization device according to the present invention is provided, including a suction nozzle, an airway, a power supply battery, the heating control apparatus according to any one of the foregoing, and other structures. It may be understood that, assembly and selection of the structures may be implemented with reference to an electronic vaporization device in the related art, which is common knowledge in the art and is not described in detail herein.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A heating control method, comprising:
obtaining a current inhalation parameter according to an inhalation situation of a user;
obtaining a corresponding target temperature threshold according to the current inhalation parameter, the target temperature threshold being progressively increased in a stepwise manner as the inhalation parameter increases; and
detecting a current heating temperature value of a heating body, and adjusting the current heating temperature value of the heating body to the target temperature threshold.

2. The heating control method of claim 1, wherein the current inhalation parameter comprises a current inhalation time or a current inhalation duration.

3. The heating control method of claim 2, wherein the obtaining a current inhalation time according to an inhalation situation of a user comprises: obtaining the current inhalation time according to an accumulated inhalation time of the user, and
wherein the obtaining a current inhalation duration according to an inhalation situation of a user comprises: obtaining the current inhalation duration according to an accumulated inhalation duration of the user.

4. The heating control method of claim 1, wherein the detecting a current heating temperature value of a heating body, and adjusting the current heating temperature value of the heating body to the target temperature threshold comprises:
detecting the current heating temperature value of the heating body; and
providing a corresponding heating parameter to the heating body according to a difference between the target temperature threshold and the current heating temperature value, to adjust the current heating temperature value of the heating body to the target temperature threshold.

5. The heating control method of claim 1, wherein the current heating temperature value of the heating body is adjusted according to a ΔT₁=(U^{∗}I^{∗}t-Q_{dissipation})/(M^{∗}C) relation,
wherein ΔT₁ represents a difference between the target temperature threshold and the current heating temperature value of the heating body, U represents a heating voltage, I represents a heating current, t represents a power-on heating time, Q_{dissipation} represents dissipation energy of the heating body, M represents a mass of a nicotine carrier heated by the heating body, and C represents a specific heat capacity of the nicotine carrier heated by the heating body.

6. The heating control method of claim 5, wherein the current heating temperature value of the heating body is adjusted by adjusting at least one heating parameter of the heating voltage U, the heating current I, or the power-on heating time t.

7. The heating control method of claim 1, further comprising:
setting corresponding target temperature thresholds according to different inhalation parameter intervals.

8. The heating control method of claim 1, wherein the target temperature threshold is progressively increased by using 10°C as a progressively increasing unit.

9. A heating control apparatus, comprising:
a first obtaining module configured to obtain a current inhalation parameter according to an inhalation situation of a user;
a second obtaining module configured to obtain a corresponding target temperature threshold according to the current inhalation parameter, the target temperature threshold being progressively increased in a stepwise manner as the inhalation parameter increases; and
a temperature processing module configured to detect a current heating temperature value of a heating body, and adjust the current heating temperature value of the heating body to the target temperature threshold.

10. The heating control apparatus of claim 9, wherein the current inhalation parameter comprises a current inhalation time or a current inhalation duration.

11. The heating control apparatus of claim 10, wherein the first obtaining module comprises:
a times obtaining unit configured to obtain the current inhalation time according to an accumulated inhalation time of the user; and
a duration obtaining unit configured to obtain the current inhalation duration according to an accumulated inhalation duration of the user.

12. The heating control apparatus of claim 9, wherein the temperature processing module comprises:
a temperature detection module configured to detect the current heating temperature value of the heating body; and
a heating execution module configured to provide a corresponding heating parameter to the heating body according to a difference between the target temperature threshold and the current heating temperature value, to adjust the current heating temperature value of the heating body to the target temperature threshold.

13. The heating control apparatus of claim 9, wherein the temperature processing module is configured to adjust the current heating temperature value of the heating body according to a ΔT₁=(U^{∗}I^{∗}t-Q_{dissipation})/(M^{∗}C) relation,
wherein ΔT₁ represents a difference between the target temperature threshold and the current heating temperature value of the heating body, U represents a heating voltage, I represents a heating current, t represents a power-on heating time, Q_{dissipation} represents dissipation energy of the heating body, M represents a mass of a nicotine carrier heated by the heating body, and C represents a specific heat capacity of the nicotine carrier heated by the heating body.

14. The heating control apparatus of claim 13, wherein the temperature processing module is configured to adjust the current heating temperature value of the heating body by adjusting at least one heating parameter of the heating voltage U, the heating current I, or the power-on heating time t.

15. The heating control apparatus of claim 9, further comprising:
a setting module configured to set corresponding target temperature thresholds according to different inhalation parameter intervals.

16. The heating control apparatus of claim 9, wherein the target temperature threshold is progressively increased by using 10°C as a progressively increasing unit.

17. An electronic vaporization device, comprising the heating control apparatus of any one of claims 9 to 16.
